# EUROPEAN PATENT APPLICATION

(11) **EP 4 537 945 A1**
(43) Date of publication of application: **16.04.2025**
(21) Application number: 23203247.4
(22) Date of filing: 12.10.2023
(51) Int. Cl.: B07C 5/02, B07B 13/00, B07C 5/342

(54) **WASTE SORTING DEVICE AND METHOD**

(71) Applicant: QCP Holding B.V., 6161 RE Geleen (NL)
(72) Inventor: Essers, Franciscus Elisabeth Jacobus, 6161 RE Geleen (NL); Venerius, Johannes, 6161 RE Geleen (NL)
(74) Representative: LyondellBasell

(57) **Abstract**

Waste sorting device for sorting plastic waste particles, e.g. plastic flakes, in a particle stream based on a characteristic of the waste particles, comprising:
- a sensor for determining a characteristic of waste particles in the particle stream;
- a particle ejector downstream from the sensor relative to the particle stream for ejecting waste particles from the particle stream based on the determined characteristic; and
- a vibratory feeder upstream from the sensor configured to provide a vibratory energy to the particle stream to feed the particle stream to the sensor via a particle guide, wherein the particle guide is provided between the vibratory feeder and the particle ejector,
characterized in, that the waste sorting device further comprises a particle catcher arranged for catching particles that bounce from the particle guide and pass through a catching region, wherein the catching region is separated from the particle guide by a catching distance in a direction perpendicular to the particle stream, wherein the particle catcher is provided upstream from the sensor.

## Description

The invention relates to a waste sorting device for sorting plastic waste particles, e.g. plastic flakes, in a particle stream. The invention further relates to a waste sorting plant comprising the waste sorting device of the invention. The invention further relates to a method of sorting waste particles wherein use is made of a waste sorting device according to the invention.

During processing, e.g. recycling, of waste, waste may be sorted based on a number of characteristics of the waste. For example, waste may be sorted on material type, size, weight, or colour. Typically, the sorting is done by hand or by machine. Errors may occur during sorting, irrespective of whether or not the sorting is done by hand or by machine, and for example a small number, e.g. typically less than 10%, of waste is not sorted correctly. Correctly sorting of waste may allow for
In known sorting processes, plastic waste, e.g. plastic flakes, may be mechanically and/or chemically processed to reduce the waste to waste particles, such as flakes. The waste particles typically have a small size. Preferably, the waste particles have substantially uniform dimensions. The waste particles are further sorted, e.g. based on a colour thereof.

The sorting of waste particles may be done by a waste sorting device which processes a particle stream of waste particles. The waste sorting device comprises a vibratory feeder for providing a vibratory energy to the particle stream. The vibratory energy may provide a uniform particle stream, e.g. having a uniform velocity and particle density distribution, to a sensor of the waste sorting device. The vibratory feeder may be configured for receiving the waste particles, e.g. from a waste particle hopper, and to use vibrations to provide the particle stream to the sensor via the particle guide.

The particle stream may flow from the vibratory feeder to the sensor via a particle guide, which may be an inclined slope, e.g. a slide, or a chute for the particles. The sensor is configured to determine a characteristic of the waste particles in the particle stream. For example, the sensor may comprise one or more optical sensors for determining a colour of the waste particles. For example, one or more light sources may be provided to allow the colour sensor to determine a colour of waste particles passing through a measurement zone of the waste sorting device. The sensor is provided downstream, relative to the particle stream, from the vibratory feeder.

The device further comprises a particle ejector for ejecting waste particles based on the determined characteristic, wherein the ejector is provided downstream from the sensor relative to the particle stream. In embodiments, the ejector is a blower which provides a puff of air at a time that a waste particle having that is determined to be ejected passes by the ejector. The ejector thus ejects waste particles from the particle stream based on the measurement by the sensor.

The waste sorting device may comprise a separate processor configured for receiving the determined characteristic from the sensor and for actuating the ejector based on the received characteristic for ejecting a waste particle from the particle stream.

A problem with the known waste sorting device is that the plastic waste particles may be contaminated with rubber waste particles, which rubber waste particles may not be removed from the particle stream by the waste sorting device, which may result in inferior recycling products. For example, bottles recycled from the plastic waste particles may have holes in them due to the presence of rubber contaminant particles.

The aim of the invention is to provide a waste sorting device that reduces the number of rubber waste particles in the particle stream.

The aim of the invention is achieved by a waste sorting device according to claim 1, characterized in, that the waste sorting device further comprises a particle catcher arranged for catching particles that bounce from the particle guide and pass through a catching region, wherein the catching region is separated from the particle guide by a catching distance in a direction perpendicular to the particle stream, wherein the particle catcher is provided upstream from the sensor.

The invention is based on the insight that the vibratory feeder causes the rubber particles to bounce, e.g. to bounce more than the plastic waste particles, resulting in the rubber particles to move further from the particle guide than the plastic waste particles in a direction perpendicular to the particle stream movement direction. By providing a particle catcher a distance, i.e. a catching distance, away from the particle guide, particles that that somehow have moved away from the particle stream may be captured. Particles entering in the catching region may predominantly be rubber particles due to the aforementioned bouncing property thereof.

In embodiments, the particle guide is inclined with respect to a horizontal, e.g. in use, such that an upstream side of the particle guide is elevated with respect to a downstream side of the particle guide. In these embodiments, the particle stream may use the particle guide as a slide to slide from the vibratory feeder to the sensor.

In embodiments, the particle catcher comprises one or more particle catching plates, wherein the catching plates are at least partially provided in the catching region for catching particles therein and for guiding caught particles away from the particle guide. The particle catching plates are provided such that a particle may bounce from the particle stream to the catching region and then fall on the particle catching plates. The particle catching plates may be provided such that a particle falling thereon may be moved away from the particle stream, e.g. via a particle outlet. This allows to effectively catch and remove particles from the particle stream that enter the catching region. In particular, this may be done passively in contrast to the active particle ejection based on the sensor measurements.

In embodiments, the particle catcher comprises a particle remover, e.g. a particle remover screw, for removing particles from the particle catcher. For example, the particle remover may comprise one or more catcher outlets for allowing caught particles to move away from the particle catcher. For example, the catching plates may guide particles from the catching region to an outlet region for allowing the particles to move away from the particle catcher. For example, the particle remover may comprise one or more particle remover screws, e.g. an active system to push particles away from the particle catcher towards a catcher outlet.

In embodiments, the waste sorting device further comprises:
- a first outlet downstream from the particle ejector for allowing the particle stream to exit the waste sorting device; and
- a second outlet for allowing ejected particles to exit the waste sorting device.

For example, the device may be configured to allow particles that flow into the first outlet to be reintroduced into the same, or another similar device, to allow the particles to be sorted again to increase the sorting efficiency of the process.

In embodiments, wherein the particle guide forms part of a particle chute that encircles the particle stream and the catching region, wherein the particle guide forms a lower side of the particle chute. The chute may be a pipe that covers the particle guide and particle catcher to prevent access thereto from an outside. The chute is preferably provided at an inclination to allow the particle stream to slide along the particle guide. For example, the particle guide may be formed by a lower section of the chute and the particle catcher may be provided in an upper section of the chute.

In embodiments, the vibratory feeder is configured to feed the particle stream to the particle guide such that the particles in the particle stream are substantially uniformly distributed. The vibratory feeder provides energy to the particles in the particle stream via vibrations, this may allow the particle density in the particle stream to become more uniform, smoothing out any areas with higher or lower particle density. This this may allow the particle sorting device to better sort the particles in the particle stream.

In embodiments, the sensor is a colour sensor and the characteristic is a colour of the waste particles. For example, device may be configured to remove all particles that do not have a red colour. In this case, the sensor sends a signal to the ejector when a particle passes that is not red and the ejector removes that particle. Or, alternatively, the sensor provides a signal to the ejector when a particle passes that is red, and the ejector does not remove that particle.

In embodiments, the ejector is configured to eject a waste particle from the particle stream if the determined characteristic of the to be ejected waste particle corresponds to a predetermined characteristic.

The invention further relates to a waste sorting plant comprising a waste sorting device according to the invention.

The invention further relates to a method for sorting waste particles wherein use is made of a waste sorting device according to the invention.

In embodiments, the method comprises:
- feeding the particle stream with the vibratory feeder to the sensor via the particle guide;
- determining the characteristic of particles in the particle stream with the sensor; and
- ejecting particles from the particle stream with the ejector based on the determined characteristic,

characterized in, that the method further comprises catching particles that pass through the catching region with the particle catcher, wherein the catching region is separated from the particle guide by a catching distance in the direction perpendicular to the particle stream.

In embodiments, the method further comprises ejecting a waste particle from the particle stream if the determined characteristic of the to be ejected waste particle corresponds to a predetermined characteristic.

In embodiments, the method further comprises feeding the particle stream multiple times into a waste sorting device according to the invention.

The invention will be explained below with reference to the drawing in which:
- Fig. 1 shows a schematic representation of a waste sorting device; and
- Fig. 2 shows a particle guide with a particle catcher in a catching region.

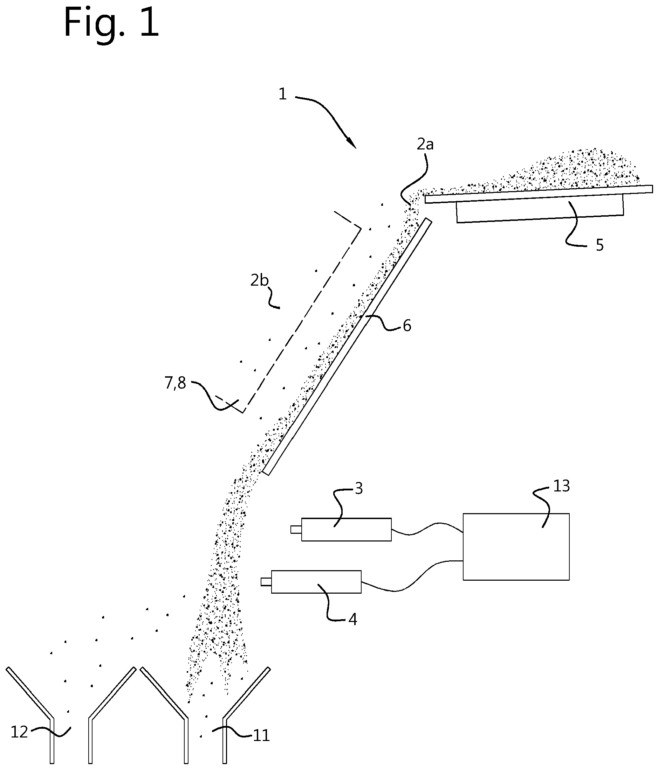

Figure 1 shows a schematic representation of a waste sorting device 1 for sorting plastic waste particles, e.g. plastic flakes, in a particle stream 2a. The waste sorting device 1 comprises a vibratory feeder 5 which receives the waste particles from an outside source, e.g. such as an inlet coupled to a waste particle storage.

The vibratory feeder 5 is configured to provide vibratory energy, for example by vibrating, to the particle stream 2a. As can be seen in the figure, the vibratory feeder 5 may be embodied as a feeder plate, e.g. an inclined feeder plate, which, due to vibrations thereof, may force the particle stream 2a to move towards a particle guide 6.

By adding the vibratory energy to the particle stream 6, the vibratory feeder 5 may cause the particle stream 2a to have a substantially uniform particle density, e.g. a substantial constant number of waste particles may flow from the vibratory feeder 5 to the particle guide 6 and beyond in a given amount of time. This allows the waste sorting device 1 to better sort the waste particles in the particle stream 2a.

The particle guide 6 allows the particle stream 2a to flow from the vibratory feeder 5 to the particle sensor 3. The particle guide 6 may be embodied as a slide along which the particle stream 2a may flow from the vibratory feeder 5 to the particle sensor 3. The particle guide 6 may form part of a chute, e.g. a closed tube, for allowing the particle stream 2a to flow from the vibratory feeder 5 to the particle sensor 3.

The waste sorting device 1 further comprises a sensor 3 which is provided downstream from the vibratory feeder 5 and particle guide 6 for determining a characteristic of waste particles in the particle stream 2a. The sensor may be an optical sensor for measuring an optical characteristic of the waste particle in the particle stream, e.g. such as a colour or a reflectivity thereof. The sensor 3 may comprise a light source, e.g. provided to provide a light beam to the particle stream, to allow improved determination of the characteristic of the waste particles. The light source may be a laser light source.

The waste sorting device 1 further comprises a particle ejector 4 which is provided downstream from the sensor 3 relative to the particle stream. The particle ejector 4 is configured to eject particles from the particle stream 2a based on the determined characteristic by the sensor 3. For example, the waste sorting device may be configured to eject particles of a certain colour, e.g. red. The sensor 3 may determine the colour of the particles in the particle stream 2a and when a particle having a red colour passes a signal may be provided to the particle ejector 4 for ejecting the red particle. For example, the particle ejector 4 may comprise a device for providing a puff of air for blowing a particle from the particle stream 2a. For example, the particle ejector 4 may be embodied as a two way valve which opens an exit depending on the determined characteristic of the particles in the particle stream.

In the shown embodiment, the particle sensor 3 and the particle ejector 4 are connected to a processor 13. The processor may be configured for controlling the sensor 3 and ejector 4. For example, the processor 13 may receive the determined characteristic from the particle sensor 3 and, based on the received signal, cause the particle ejector 4 to eject a particle from the particle stream 2a depending on the determined characteristic.

In embodiments, the processor 13 may further be configured to the vibratory feeder 5 for controlling a vibration thereof, which may allow to control characteristics of the particle stream 2a such as particle density thereof.

The waste sorting device 1 shown in figure 1 further comprises a first outlet 11 provided downstream from the particle ejector 4 for allowing the particle stream 2a to exit the waste sorting device 1 after the waste particles have been sorted. For example, the first outlet 11 may be connected to a waste particle storage which may be used for feeding waste particles to a similar or same waste sorting device 1 for further sorting of the waste particles, such as based on a different or same characteristic. The first outlet 11 may also be directly connected to a similar or same waste sorting device 1. The particles in the particle stream 2a exiting the waste sorting device 1 via the first outlet 11 may also be recycled, e.g. be used in recycled plastic, e.g. to make plastic bottles.

The waste sorting device 1 shown in figure 1 further comprises a second outlet 12 for allowing particles ejected by the particle ejector 4 to exit the waste sorting device 1. The second outlet 12 may be provided such that particles that are ejected by a blowing particle ejector 4 fall into the second outlet 12. The second outlet 12 may be connected to a particle storage for storing the ejected particles, or to a same or similar waste sorting device 1 for continuing the sorting of the ejected waste particles. The ejected waste particles may also be used in recycling, e.g. to be used in recycled plastic.

A downside of known waste sorting devices is that contaminant particles, e.g. rubber particles, may be present in the particle stream 2a, e.g. due to impurities in the to be recycled waste particles, e.g. due to contaminations of the to be recycled waste particles. These contaminant particles may not be sorted by the known waste sorting devices because the particle sensors and particle ejectors thereof may not be able to distinguish these contaminant particles from the normal waste particles or they may not be able to eject the contaminant particles from the particle stream.

In order to overcome this problem, the waste sorting device 1 of the invention further comprises a particle catcher 7 that is arranged in a catching region 8. Figure 1 schematically shows the particle catcher 7 and catching region 8 a catching distance from the particle guide 6. In embodiments, the particle guide 6 may form part of a particle chute 6 which encircles both the particle stream 2a and the catching region 8. In these embodiments, the particle stream 2a flows inside the particle chute 6 from the vibratory feeder 5 to the particle sensor 3.

The particle catcher 7 is arranged for catching particles 2b that bounce from the particle guide 6 and pass through the catching region 8. In particular, rubber particles may start bouncing due to the vibratory energy provided to them by the vibratory feeder 5. By providing the particle catcher 7 a distance from the particle guide 6, at which distance the particle stream passes underneath the particle catcher 7 but the bouncing particles 2b do not, the bouncing particles 2b may be effectively separated from the particle stream 2a.

The particle catcher 7 may be an active particle catcher, e.g. a particle ejector such as a particle ejector 4, which may be configured to eject any particle that enters the catching region. In embodiments, the particle catcher 7 may be a passive particle catcher 7, e.g. a particle catcher that passively catches bouncing particles 2b.

The particle catcher 7 may comprise a particle remover 10 for removing caught bouncing particles 2b. The particle remover 10 may be a passive particle remover 10, e.g. the particle catcher may guide caught bouncing particles 2b away from the catching region 8. The particle remover 10 may also be an active particle remover 10, e.g. such as a particle removing screw which may push against caught bouncing particles 2b to remove them from the catching region 8.

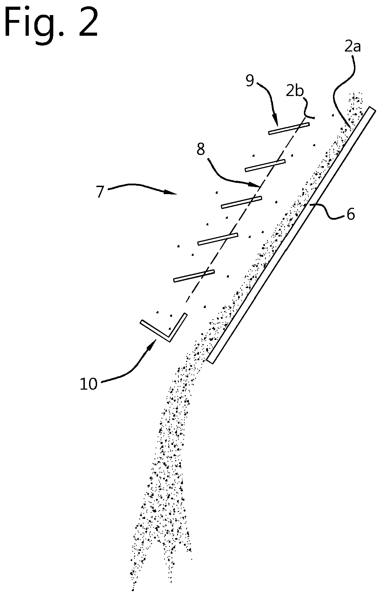

Figure 2 schematically shows a particle guide 6 with a particle catcher 7 in a catching region 8. The particle guide 6 is inclined with respect to a horizontal such that, e.g. in use, an upstream side of the particle guide 6 is elevated with respect to a downstream side of the particle guide 6. This may allow the particle stream 2a to flow via the particle guide 6 to the particle sensor 3 under the effect of gravity.

The particle catcher 7 shown in figure 2 comprises multiple, e.g. 4, particle catching plates 9 which are configured to catch bouncing particles 2b that enter the catching region 8. The catching region 8 is depicted as a line which indicates the catching distance from the particle guide 6.

The catching plates 9 are provided partially in the catching region 8 for catching particles 2b therein and for guiding caught particles 2b away from the particle guide towards the particle remover 10.

As can be seen in figure 2, in the shown embodiment, each catching plate 9 has at least a first side thereof in the catching region 8, in the shown figure the left side of the catching plate 9. A second side of each of the catching plates 9 is between the catching region 8 and the particle guide 6. In embodiments, the second side may be between the catching region 8 and the particle guide 6 or also in the catching region 8. The second side, e.g. an end thereof, may indicate a boundary of the catching region 8.

The particle catching plates 9 are provided such that a particle 2b may bounce from the particle stream 2a to the catching region 8 and then fall on the particle catching plates 9. The shown particle catching plates 9 are provided such that a particle 2b falling thereon may move away from the particle stream 2a, e.g. via a particle outlet connected to the particle remover 10. This allows to effectively catch and remove particles from the particle stream that enter the catching region. In particular, this may be done passively in contrast to the active particle ejection based on the sensor measurements.

In order to allow the catching plates 9 to effectively move the caught particles 2b away from the particle stream 2a, the multiple particle catching plates 9 are provided at an inclination, e.g. relative to the particle guide, such that for each catching plate the first side, e.g. the side in the catching region 8 at a left side of the catching plates 9, of the catching plate 9 is lowered with respect to the second side of the catching plate 9. In particular, e.g. if the particle guide is provided inclined with respect to a horizontal such as shown, the particle catching plates 9 may allow caught particles 2b to slide over them under the effect of gravity and away from the particle guide 6.

## Claims

1. Waste sorting device for sorting plastic waste particles, e.g. plastic flakes, in a particle stream based on a characteristic of the waste particles, comprising:
- a sensor for determining a characteristic of waste particles in the particle stream;
- a particle ejector downstream from the sensor relative to the particle stream for ejecting waste particles from the particle stream based on the determined characteristic; and
- a vibratory feeder upstream from the sensor configured to provide a vibratory energy to the particle stream to feed the particle stream to the sensor via a particle guide, wherein the particle guide is provided between the vibratory feeder and the particle ejector,
**characterized in, that** the waste sorting device further comprises a particle catcher arranged for catching particles that bounce from the particle guide and pass through a catching region, wherein the catching region is separated from the particle guide by a catching distance in a direction perpendicular to the particle stream, wherein the particle catcher is provided upstream from the sensor.

2. Waste sorting device according to claim 1, wherein the particle guide is inclined with respect to a horizontal, e.g. in use, such that an upstream side of the particle guide is elevated with respect to a downstream side of the particle guide.

3. Waste sorting device according to one or more of the preceding claims, wherein the particle catcher comprises one or more particle catching plates, wherein the catching plates are at least partially provided in the catching region for catching particles therein and for guiding caught particles away from the particle guide.

4. Waste sorting device according to one or more of the preceding claims, wherein the particle catcher comprises a particle remover, e.g. a particle remover screw, for removing particles from the particle catcher.

5. Waste sorting device according to one or more of the preceding claims, wherein the waste sorting device further comprises:
- a first outlet downstream from the particle ejector for allowing the particle stream to exit the waste sorting device; and
- a second outlet for allowing ejected particles to exit the waste sorting device.

6. Waste sorting device according to one or more of the preceding claims, wherein the particle guide forms part of a particle chute that encircles the particle stream and the catching region, wherein the particle guide forms a lower side of the particle chute.

7. Waste sorting device according to one or more of the preceding claims, wherein the vibratory feeder is configured to feed the particle stream to the particle guide such that the particles in the particle stream are substantially uniformly distributed, e.g. such that the particle stream has a substantially uniform particle density.

8. Waste sorting device according to one or more of the preceding claims, wherein the sensor is a colour sensor and the characteristic is a colour of the waste particles.

9. Waste sorting device according to one or more of the preceding claims, wherein the ejector is configured to eject a waste particle from the particle stream if the determined characteristic of the to be ejected waste particle corresponds to a predetermined characteristic.

10. Waste sorting plant comprising a waste sorting device according to one or more of the preceding claims.

11. Method for sorting waste particles wherein use is made of a waste sorting device according to one or more of the claims 1-10.

12. Method according to claim 11, wherein the method comprises:
- feeding the particle stream with the vibratory feeder to the sensor via the particle guide;
- determining the characteristic of particles in the particle stream with the sensor; and
- ejecting particles from the particle stream with the ejector based on the determined characteristic,
**characterized in, that** the method further comprises catching particles that pass through the catching region with the particle catcher, wherein the catching region is separated from the particle guide by a catching distance in the direction perpendicular to the particle stream.

13. Method according to one or more of the claims 11 - 12, wherein the method further comprises ejecting a waste particle from the particle stream if the determined characteristic of the to be ejected waste particle corresponds to a predetermined characteristic.

14. Method according to one or more of the claims 11 - 13, wherein the method further comprises feeding the particle stream multiple times into a waste sorting device according to one or more of the claims 1 - 10.
